# EUROPÄISCHE PATENTSCHRIFT

(11) **EP 1 136 159 B1**
(45) Veröffentlichungstag und Bekanntmachung des Hinweises auf die Patenterteilung: **20.07.2005**
(21) Anmeldenummer: 00105927.8
(22) Anmeldetag: 23.03.2000
(51) Int. Cl.: B23B 31/30

(54) **Rotationsunabhängige Betätigung eines Maschinenteils**
Rotation independent activating means of a machine part
Moyen indépendant de la rotation pour activer une partie de machine

(43) Veröffentlichungstag der Anmeldung: 26.09.2001
(73) Patentinhaber: Illinois Tool Works, Inc., Glenview, Cook County, Illinois 60025 (US)
(72) Erfinder: Bohler, Erwin, 9553 Bettwiesen (CH)
(74) Vertreter: Blum, Rudolf Emil Ernst

(56) Entgegenhaltungen:
- DE-A- 3 325 880
- GB-A- 513 390
- GB-A- 626 229
- US-A- 3 417 672

## Beschreibung

Die Erfindung betrifft ein Verfahren und eine Vorrichtung zur Betätigung eines in einem rotierenden Maschinenteil befindlichen und durch Fluiddruck betätigbaren Mechanismus gemäss den Oberbegriffen der unabhängigen Patentansprüche. Ein solches Maschinenteil ist beispielsweise ein sogenanntes Vorderendfutter einer Werkzeugmaschine.

Es ist bekannt, das Öffnen und/oder Schliessen, im Folgenden generell als "Schalten" des Futters bezeichnet, pneumatisch oder hydraulisch zu bewirken, was insbesondere für die serienmässige Bearbeitung von Werkstücken vorteilhaft ist. Die bekannten druckluftbetätigten Futter können jedoch nur im Stillstand geschaltet werden, weil die beim Übergang von der unbeweglichen Druckluft-Zuführleitungen zu den Leitungen im rotierenden Futter verwendeten Membrandichtungen nur im Stillstand einen Druckaufbau im futterseitigen Teil der Leitungen ohne grossem Druckverlust gestatten. Denn, falls die Leitungen bei drehendem Futter unter Druck gesetzt werden, unterliegen die Dichtungen unter der Druckbeaufschlagung einer unzulässigen Reibung und einem entsprechenden Verschleiss. Zudem sind eine unerwünschte Verschmutzung der Dichtpartie, und damit verbundene Dichtigkeitsverluste unvermeidlich. Es sind auch Anordnungen bekannt, bei denen ein um den Futtermechanismus herum angeordneter Luftzuführring mittels Kugellager auf dem Futtermechanismus gelagert ist, wobei die Druckluftübertragung über einen zwischen Ring und Futtermechanismus befindlichen zylindrischen Luftspalt erfolgt. Diese Anordnung ist jedoch nur bei kleinen Durchmessern des Luftspaltes möglich, da sonst zu grosse Druckverluste auftreten, und demzufolge Kraftspannfutter nicht mehr geschaltet werden können. Auch ist die bei sperrigen Futtern notwendige Verwendung von Kugellagern mit grossen Durchmessern problematisch, unter anderem wegen ihrer starken Erwärmung bei hohen Rotationsgeschwindigkeiten. Ausserdem besteht bei den bekannten Lösungen auch im Normalbetrieb bei rotierendem Futter die Gefahr eines Druckverlustes wegen unvollständiger Dichtung zwischen dem stationären Ring und dem drehenden Futter. Daher verlangt die Erhaltung des nötigen Druckes - etwa für das Schliessen der Zange - im futterseitigen Teil der Leitungen die Verwendung eines diese Leitungen abschliessenden Rückschlagventiles. Die Sicherheit der Anlage, beispielsweise gegen ein ungewolltes Öffnen der Zange während der Verarbeitung eines Werkstükkes, beruht demnach ausschliesslich auf dem einwandfreien Funktionieren des Rückschlagventiles, was Gefahren birgt. Schliesslich sind die verwendeten Membran- oder Manschetten-Dichtungen zwischen rotierendem und ortsfestem Teil der Leitungen anfällig gegen Verschmutzungen, was auf einer Werkzeugmaschine besonders nachteilig ist.

DE 33 25 880 A1 zeigt eine Betätigungsvorrichtung, bei der ein nicht rotierender Fluidzuführring auf einer rotierenden Welle mit einem doppeltwirkenden Fluidzylinder mittels drei axial hintereinander angeordneter hydrostatischer Lager gelagert ist. Zwischen den Lagerstellen sind im Fluidzuführring umlaufende Nuten vorhanden, welche der Aufnahme des Leckagefluids von den Lagerstellen dienen und mit absperrbaren Entlastungsleitungen im Fluidzuführing verbunden sind. Die rotierende Welle weist im Bereich der beiden umlaufenden Nuten Entnahmeöffnungen auf, welche über Fluidkanäle mit dem vorderen und dem hinteren Fluidraum des doppeltwirkenden Fluidzylinders verbunden sind. Durch abwechselndes Öffnen und Schliessen der Entlastungsleitungen der beiden umlaufenden Nuten kann Leckagefluid von den Lagerstellen unter Druck entweder in den vorderen oder in den hinteren Fluidraum geführt werden und dadurch der Fluidzylinder wahlweise in der einen oder anderen Richtung betätigt werden. Während diese Konstruktionsweise gegenüber dem zuvor dargelegten Stand der Technik den Vorteil aufweist, dass eine Betätigung des Fluidzylinders auch bei rotierender Welle möglich ist und auch hohe Drehzahlen ohne eine entsprechend starke Erwärmung im Lagerbereich möglich sind, weist diese Bauweise den Nachteil auf, dass für ein seicheres Funktionieren grosse Fluid-Leckagemengen nötig sind, was zu hohen Betriebskosten führt, und dass der Betätigungsdruck nicht grösser sein kann als der Fluidspeisedruck für die Fluidlager, wodurch die realisierbaren Betätigungskräfte bei einer wirtschaftlichen Betriebsweise der Vorrichtung relativ gering sind.

Die Erfindung vermeidet die genannten Nachteile und bringt ausserdem nennenswerte zusätzliche Vorteile. So kann der Luftspalt sehr eng und der Druckverlust entsprechend klein gehalten werden. Durch die Enge des Luftspaltes und die darin herrschenden Strömungsverhältnisse ist das Eindringen von Verschmutzungen praktisch ausgeschlossen, was die Verschleissfreiheit noch erhöht, und sowohl für die Zuverlässigkeit wie für die Präzision der Maschine von Bedeutung ist.

Im Folgenden soll die Erfindung anhand eines Ausführungsbeispiels und mit Hilfe der Zeichnung näher erläutert werden, deren sämtliche Figuren zur besseren Anschaulichkeit stark schematisiert sind. Sie sind insbesondere nicht massstabgetreu, da unter anderem die Lagerspalte der Klarheit wegen vergrössert dargestellt wurden.

Es zeigt:
Fig. 1 einen nur der Übersicht dienenden, stark vereinfachten Schnitt durch eine Ausführungsform der Erfindung;
Fig. 2 eine schematische Ansicht der Leitungsanordnung im Steuerring und Rotor in der Nähe des Fluidlagers. Der Einfachheit halber wurden mehrere achsiale Ebenen in eine einzige zusammengeklappt;
Fig. 3 eine teilweise schematische Ansicht eines Schnittes längs III - III Fig. 2;
Fig. 4A eine schematisierte in Richtung des Pfeiles A radial nach innen gerichtete Ansicht am Ort des Schnittes IV - IV der Fig. 2;
Fig. 4B und C schematisierte, in Richtung der Pfeile B und C radial nach aussen gerichtete Ansichten am Ort des Schnittes IV - IV der Figuren 2 und 5, an zwei um einen gewissen Winkel versetzten Stellen;
Fig. 5 ein Prinzipschema der Leitungen in Richtung des Pfeiles D der Fig. 2 gesehen.

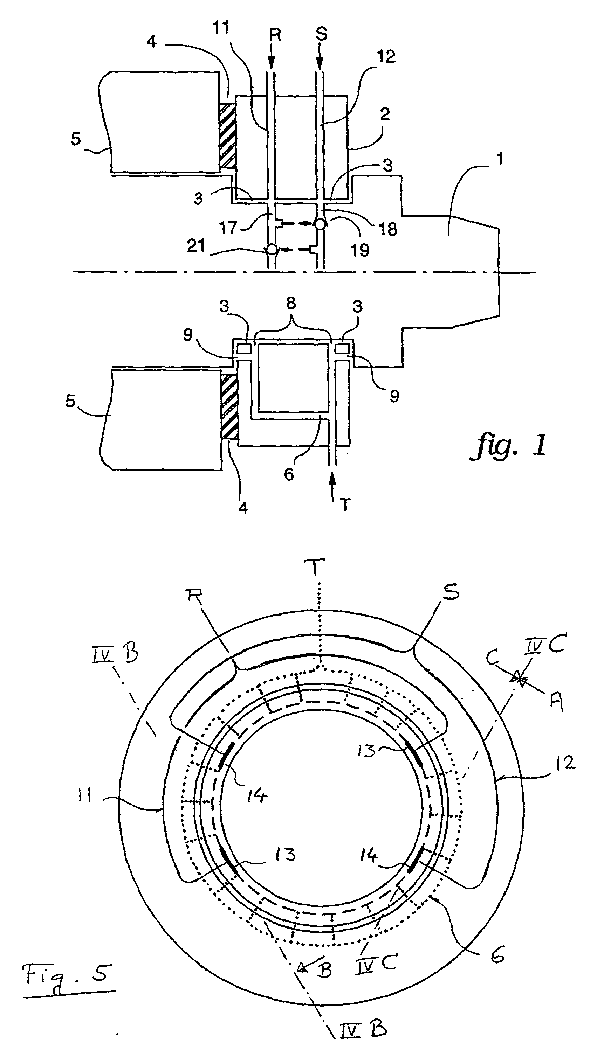

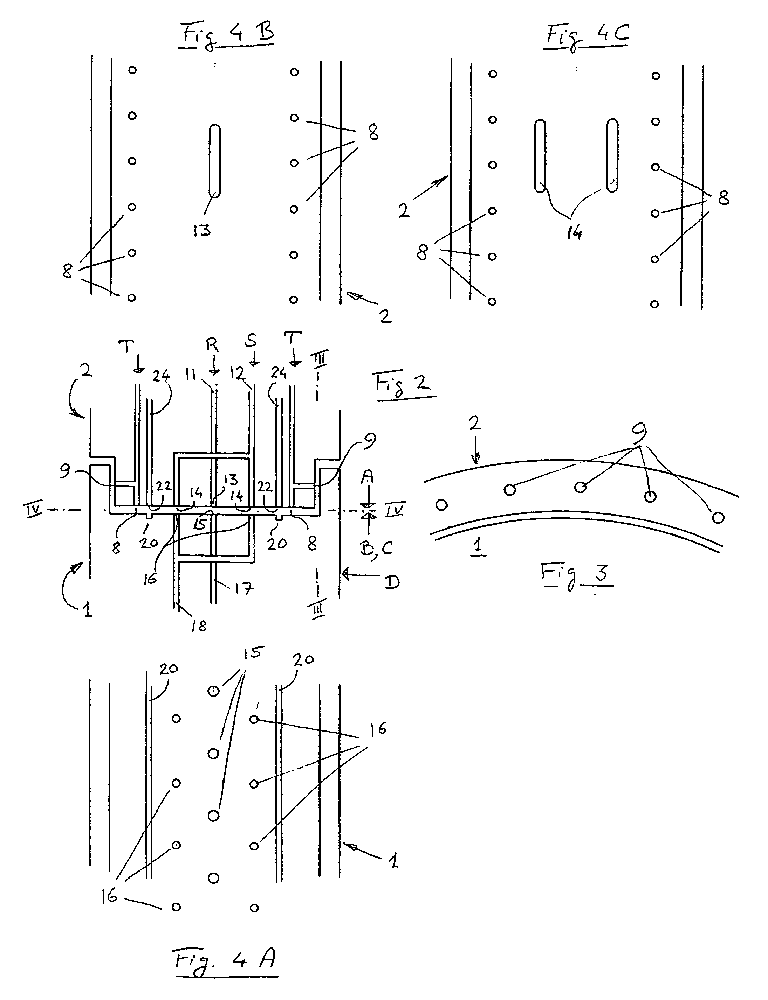

Die Fig. 1 veranschaulicht das Prinzip der Erfindung, indem sie einen stark schematisierten Schnitt durch eine mögliche Ausführungsform zeigt. Dabei sind die Schnitte beidseitig der Achse um einen gewissen Winkel versetzt. Es bezeichnet 1 das druckluftbetätigte Spannfutter einer (nicht dargestellten) Werkzeugmaschine. Auf dem Körper des Futters, und von diesem durch zwei Luftlager 3 getrennt, sitzt ein Steuerring 2, der mittels einer elastischen Halterung 4 so an einem festen Teil 5 der Werkzeugmaschine befestigt ist, dass er eine gewisse Bewegungsfreiheit besitzt, ohne sich jedoch mit dem Futter 1 mitdrehen zu können. Für diese Befestigung kann auch eine metallische Aufhängung verwendet werden, welche das zur Vermeidung einer eventuellen mechanischen Überbestimmtheit notwendige Spiel zulässt. Die für den Betrieb des Luftlagers 3 notwendige Druckluft, im Folgenden als Tragluft bezeichnet, tritt in T in die Leitungen 6 ein, welche sie über den ganzen Umfang des Steuerringes 2 verteilen (wie durch die punktierten Linien in Fig. 5 veranschaulicht). Diese Leitungen münden in einem ersten Satz von radial einwärts gerichteten Mündungen 8, welche in gleichmässiger Winkelteilung längs der Ränder der inneren Lagerfläche des Steuerringes 2 verteilt sind (siehe auch Fig. 4B und 4C), und in einem zweiten Satz von achsial in entgegengesetzten Richtungen gerichteten Mündungen 9, die in gleichmässiger Winkelteilung über die seitlichen Lagerflächen des Steuerringes 2 verteilt sind (siehe auch Fig. 3). Die durch den ersten Satz von Mündungen 8 strömende Luft erzeugt das als Lager wirkende, den Ring trasende Luftkissen, während die durch den zweiten, seitlichen Satz 9 von Mündungen strömende Luft das den achsialen Druck aufnehmende Luftkissen erzeugt.

Des weiteren sind im Steuerring 2 Steuerleitungen 11 und 12 für die Zufuhr von Steuerluft, welche das Öffnen respektive das Schliessen des Futters 1 bewirkt, vorgesehen. Die Pfeile R und S bezeichnen den Eintritt von Druckluft zum Öffnen, respektive zum Schliessen des Futters. Die Leitung 11 mündet in zwei um 180° versetzte, schlitzförmige Mündungen 13 in der Mitte der Lagerfläche des Steuerringes 2 (Fig. 4B und 5). In der Fig. 5 ist die Lage dieser Schlitze durch verdickte Striche angedeutet. Um die durch die Schlitze 13 strömende Steuerluft weiterzuleiten, weist die äussere Lagerfläche des Futterkörpers 1, wie in Fig. 4A dargestellt, in der Mitte einen Satz von gleichmässig über ihren Umfang verteilten Eingängen 15 zu Steuerkanälen 17 im Futterkörper 1 auf. Diese Kanäle führen zu einem (nicht gezeigten) allen gemeinsamen pneumatischen Mechanismus zum Öffnen des Futters. Der gegenseitige Abstand der Eingänge 15 ist geringfügig kleiner als die Länge des Schlitzes 13, so dass dieser unabhängig von der gegenseitigen Winkelstellung von Steuerring und Futter stets mindestens einem Eingang 15 gegenübersteht. Dadurch ist eine strömungsmässige Verbindung zwischen der zum Öffnen des Futters vorgesehenen Steuerleitung 11 und dem im Futterkörper 1 befindlichen Mechanismus zum Öffnen des Futters bei jeder Stellung des Futters gesichert. Die Dicke der aerostatischen Lagerung kann klein genug gewählt werden, um nur einen geringen Druckverlust beim Übergang zwischen dem Schlitz 13 und einem oder mehreren Eingängen 15 zu verursachen.

Die für das Schliessen des Futters vorgesehene Steuerleitung 12 im Steuerring 2 mündet in zwei um 180° versetzte Paare von schlitzförmigen Mündungen 14, die symmetrisch zur Mitte der Lagerfläche des Steuerringes 2 angeordnet sind (Fig. 4C und 5). Fig. 5 veranschaulicht den Verlauf der Leitungen 11 und 12 und zeigt die Lage ihrer schlitzförmigen Mündungen 13 und 14 durch verdickte Striche an. Um die aus den Schlitzen 14 strömende Steuerluft weiterzuleiten, weist die äussere Lagerfläche des Futterkörpers 2 zwei parallele Reihen von gleichmässig über den Umfang des Lagers verteilten Eingängen 16 zu Steuerkanälen 18 im Futterkörper 2 (Fig. 4A) auf. Diese Kanäle führen zu einem (nicht gezeigten) allen gemeinsamen pneumatischen Mechanismus zum Schliessen des Futters. Wie in Fig. 1 angedeutet, kann im gemeinsamen Teil der Kanäle 18 ein Rückschlagventil 19 vorgesehen sein, um das Futter auch bei einem ungewollten Druckabfall in der Leitung 12 geschlossen zu halten. Das Ventil wird durch eine Vorrichtung gesteuert, die es bei genügendem Druck im Kanal 17 zwangsweise öffnet, so dass das Futter geöffnet werden kann. In symmetrischer Weise ist im Kanal 17 ein Rückschlagventil 21 angeordnet, welches durch einen hinreichenden Druck im Kanal 18 entriegelt werden kann. Der gegenseitige Abstand aufeinanderfolgender Eingänge 16 ist geringfügig kleiner als die Länge der Schlitze 14, so dass die strömungsmässige Verbindung der Steuerleitungen 12 des Ringes mit den Steuerkanälen 18 des Futterkörpers unabhängig von der Winkelstellung des Futterkörpers bezüglich des Steuerringes aufrechterhalten bleibt. Auf diese Weise kann das Futter unabhängig davon geschaltet werden, ob es sich dreht oder nicht.

Um die Trennung zwischen der längs der Ränder des Lagers bestehenden aerostatischen Lagerung und den das Lager in seinem mittleren Teil durchquerenden Strömen von Steuerluft zu verbessern, ist auf der Aussenseite jeder der beiden Reihen von Eingängen 16 eine umlaufende Nut 20 in der Lagerfläche des Futterkörpers ausgespart. Ihr gegenüber sind im Steuerring radial gerichtete Entlüftungsöffnungen 22 vorgesehen, die in Entlüftungsleitungen 24 führen. Letztere dienen hauptsächlich dazu, überschüssige Tragluft abzuführen und können an ihrem anderen Ende ins Freie münden.

Obwohl im hier beschriebenen Ausführungsbeispiel das Futter pneumatisch geschaltet wird und der Steuerring auf einem Luftlager gelagert ist, funktioniert die Erfindung auf analoge Weise für hydraulisch betätigte Maschinenteile mit einem auf Ölspaltlager gelagerten Steuerring.

## Patentansprüche

1. Betätigungsvorrichtung für mindestens einen, in einem rotierenden Maschinenteil (1) befindlichen und durch Fluiddruck betätigbaren Mechanismus, mit einem auf dem Maschinenteil (1) gelagerten, nichtrotierenden Steuerring (2), welcher mindestens eine Geber-Leitung (11, 12) für die Zufuhr von Betätigungsfluid zu mindestens einer zugeordneten, zum Mechanismus führenden Nehmer-Leitung (17, 18) im rotierenden Maschinenteil (1) aufweist, wobei mindestens eine aussenliegende Lagerfläche des Steuerringes (2) mittels eines Trägerfluids auf mindestens einer innenliegenden Lagerfläche des Maschinenteils (1) fluidgelagert ist und der zwischen Geber-Leitung (11, 12) und Nehmer-Leitung (17, 18) fliessende Strom von Betätigungsfluid einen durch das Trägerfluid aufrechterhaltenen Ringspalt zwischen Maschinenteil (1) und Steuerring (2) durchquert, **dadurch gekennzeichnet, dass** mindestens eine Geber-Leitung (11, 12) mehrere, um die Achse des Fluidlagers um einen bestimmten Winkel gegeneinander versetzte Geber-Öffnungen (13, 14) aufweist.

2. Betätigungsvorrichtung nach Anspruch 1, **dadurch gekennzeichnet, dass** der Steuerring (2) mindestens eine Speiseleitung (6) für die Zufuhr von Trägerfluid zum Fluidlager aufweist, die in mindestens zwei Reihen von peripher auf der aussenliegenden Lagerfläche angeordneten Mündungen (8) endet.

3. Betätigungsvorrichtung nach Anspruch 2, **dadurch gekennzeichnet, dass** die Speiseleitung (6) in mindestens zwei peripheren Reihen von Mündungen (8, 9) endet, wobei die Richtungsvektore der Mündungen (9) beider Reihen in achsialer Richtung des Fluidlagers unterschiedliche Komponenten aufweisen.

4. Betätigungsvorrichtung nach Anspruch 3, **dadurch gekennzeichnet, dass** die Speiseleitung (6) in einem Paar von Reihen mit einwärts gerichteten Mündungen (9) und in in einem Paar von Reihen mit in achsial entgegengesetzten Richtungen orientierten Mündungen (9) endet.

5. Betätigungsvorrichtung nach einem der vorangehenden Ansprüche, **dadurch gekennzeichnet, dass**.der Steuerring (2) mehrere Geber-Leitungen (11, 12) für das Betätigungsfluid aufweist, wobei die Geber-Öffnungen (13, 14) der verschiedenen Leitungen (11, 12) in achsialer Richtung des Fluidlagers gegeneinander versetzt sind

6. Betätigungsvorrichtung nach einem der vorangehenden Ansprüche, **dadurch gekennzeichnet, dass** der Steuerring (2) mindestens zwei Geber-Leitungen (11, 12) aufweist, von denen die erste Geber-Leitung (12) zwei um 180° versetzte Paare von in achsialer Richtung des Fluidlagers gegenseitig verschobenen Geber-Öffnungen (14) besitzt, während die zweite Geber-Leitung (11) zwei ebenfalls um 180° versetzte Geber-Öffnungen (13) aufweist, die in achsialer Richtung des Fluidlagers zwischen den gegenseitig verschobenen Geber-Öffnungen (14) der ersten Geber-Leitung (12) liegen und gegenüber diesen um einen bestimmten Winkel versetzt sind.

7. Betätigungsvorrichtung nach einem der Ansprüche 2 bis 6, **dadurch gekennzeichnet, dass** mindestens eine Geber-Leitung (11, 12) in Geber-Öffnungen (13, 14) endet, die in achsialer Richtung des Fluidlagers zwischen zwei peripher angeordneten Mündungsreihen (8) liegen.

8. Betätigungsvorrichtung nach einem der vorangehenden Ansprüche, **dadurch gekennzeichnet, dass** der rotierende Maschinenteil (1) mindestens eine Nehmer-Leitung (17, 18) aufweist, um den Druck des Betätigungsfluides auf einen zu betätigenden Mechanismus zu übertragen, wobei die Nehmer-Leitung (17, 18) eine Reihe von peripher angeordneten Nehmer-Öffnungen (15, 16) aufweist, von denen in jeder Stellung des rotierenden Maschinenteils (1) mindestens eine mit einer Geber-Öffnung (13, 14) einer zugeordneten Geber-Leitung (11, 12) fluchtet.

9. Betätigungsvorrichtung nach Anspruch 8, **dadurch gekennzeichnet, dass** die Nehmer-Öffnungen (15, 16) einer Nehmer-Leitung (17, 18) in einer gleichmässigen Kreisteilung angeordnet sind, und dass mindestens eine Geber-Öffnung (13, 14) der zugeordneten Geber-Leitung (11, 12) einen länglichen Schlitz bildet, dessen Länge mindestens gleich dem Abstand zweier aufeinanderfolgender Nehmer-Öffnungen (15, 16) plus dem kleinsten Quermass einer Nehmer-Öffnung (15, 16) ist.

10. Betätigungsvorrichtung nach einem der Ansprüche 7 - 9, **dadurch gekennzeichnet, dass** in achsialer Richtung des Fluidlagers gesehen, zwischen einer peripheren Mündungsreihe (8) und einer Geber-Öffnung (13, 14) mindestens eine umlaufende Nut (20) in der innenliegenden Lagerfläche ausgespart ist, die mit mindestens einer Mündung (22) mindestens eines im Steuerring (2) liegenden, nach aussen führenden Entlüftungskanals (24) fluchtet.

11. Betätigungsvorrichtung nach einem der vorangehenden Ansprüche, **dadurch gekennzeichnet, dass** der rotierende Maschinenteil (1) mindestens zwei Nehmer-Leitungen (17, 18) mit eingangsseitig angeordneten Rückschlagventilen (19, 21) aufweist, wobei das Rückschlagventil (19, 21) jeder Nehmer-Leitung (17, 18) durch einen bestimmten Druck in einer anderen Nehmer-Leitung (18, 17) zwangsweise geöffnet wird.

12. Betätigungsvorrichtung nach einem der vorangehenden Ansprüche, **dadurch gekennzeichnet, dass** der Maschinenteil (1) ein Vorderendfutter (1), und der Mechanismus eine pneumatisch betätigte Vorrichtung zum Öffnen respektive Schliessen des Futters (1) ist.

13. Verfahren zur Betätigung eines in einem rotierenden Maschinenteil (1) befindlichen und durch Fluiddruck betätigbaren Mechanismus, wobei mindestens ein Strom von Betätigungsfluid zwischen zwei Fluidlagern, die einen nicht-rotierenden Steuerteil (2) vom rotierenden Maschinenteil (1) trennen, vom einen Teil zum anderen übergeht, **dadurch gekennzeichnet, dass** der Übergang des Betätigungsfluids zwischen einer Anzahl radial am Steuerteil angebrachten Öffnungen (13, 14) von Zufuhrleitungen (11, 12) und einer Reihe von radial am Maschinenteil (1) angebrachten Öffnungen (15, 16) von Empfangskanälen (17, 18) geschieht, die so angeordnet sind, dass bei jeder Relativstellung beider Teile (1, 2) mindestens eine Öffnung (13, 14) jeder Zufuhrleitung (11, 12) mindestens teilweise mit mindestens einer Öffnung (15, 16) eines zugehörigen Empfangskanales (17, 18) fluchtet.

14. Verfahren nach Anspruch 13, **dadurch gekennzeichnet, dass** das durch den Überdruck in den Fluidlagern bewirkte Ausströmen von Trägerfluid aus den Lagern verwendet wird, um einer von aussen stammenden Verschmutzung der Lager sowie des Betätigungsfluids entgegenzuwirken.

15. Anwendung des Verfahrens nach einem der Ansprüche 13 bis 14, zum Schalten einer Werkstückhalterung auf einer Werkzeugmaschine.

## Claims

1. Actuating apparatus for at least one mechanism which can be actuated by fluid pressure and is located in a rotating machine part (1), with a non-rotating control ring (2) supported on the machine part (1), which includes at least one supplying conduit (11, 12) for the supply of actuating fluid to at least one dedicated receiving conduit (17, 18) in the rotating machine part (1), which is leading to the mechanism, wherein at least one supporting surface of the control ring (2) lying outside is fluid supported by means of a supporting fluid on at least one supporting surface of the machine part (1) lying inside and the flow of actuating fluid flowing between the supplying conduit (11, 12) and the receiving conduit (17, 18) traverses an annular gap between machine part (1) and control ring (2) which is maintained by the supporting fluid, **characterised in that** at least one supplying conduit (11, 12) comprises several supplying openings (13, 14) displaced relative to each other by a predetermined angle around the axis of the fluid bearing.

2. Actuating apparatus according to claim 1, **characterised in that** the control ring (2) comprises at least one feeder conduit (6) for the supply of supporting fluid to the fluid bearing, which ends in at least two rows of openings (8) arranged peripherally at the supporting surface which is lying outside.

3. Actuating apparatus according to claim 2, **characterised in that** the feeder conduit (6) ends in at least two peripheral rows of openings (8, 9), wherein the vectors of direction of the openings (9) of both rows have different components in the axial direction of the fluid bearing.

4. Actuating apparatus according to claim 3, **characterised in that** the feeder conduit (6) ends in a pair of rows with inwardly facing openings (9) and in a pair of rows with openings (9) oriented in axially opposite directions.

5. Actuating apparatus according to one of the preceding claims, **characterised in that** the control ring (2) includes several supplying conduits (11, 12) for the actuating fluid, whereby the supplying openings (13, 14) of the various supplying conduits (11, 12) are displaced relative to each other in axial direction of the fluid bearing.

6. Actuating apparatus according to one of the preceding claims, **characterised in that** the control ring (2) comprises at least two supplying conduits (11, 12), of which the first supplying conduit (12) possesses two pairs of supplying openings (14) displaced 180° relative to each other in axial direction of the fluid bearing, while the second supplying conduit (11) possesses two supplying openings (13) also displaced by 180°, which are located in axial direction of the fluid bearing between the relative to each other displaced supplying openings (14) of the first supplying conduit (12) and are displaced relative to same by a predetermined angle.

7. Actuating apparatus according to one of the claims 2 to 6, **characterised in that** at least one supplying conduit (11, 12) ends in supplying openings (13, 14) which are located in axial direction of the fluid bearing between two peripherally arranged rows of openings (8).

8. Actuating apparatus according to one of the preceding claims, **characterised in that** the rotating machine part (1) comprises at least one receiving conduit (17, 18) in order to transmit the pressure of the actuating fluid to a mechanism to be actuated, wherein the receiving conduit (17, 18) includes a row of peripherally arranged receiving openings (15, 16), of which in any position of the rotating machine part (1) at least one is aligned with a supplying opening (13, 14) of a dedicated supplying conduit (11, 12).

9. Actuating apparatus according to claim 8, **characterised in that** the receiving openings (15, 16) of a receiving conduit (17, 18) are arranged in an uniform circular pitch, and that at least one supplying opening (13, 14) of the dedicated supplying conduit (11, 12) forms an elongate slot, the length of which amounts to at least the distance between two subsequent receiving openings (15, 16) plus the smallest transverse dimension of a receiving opening (15, 16).

10. Actuating apparatus according to one of the claims 7-9, **characterised in that**, seen in the axial direction of the fluid bearing, at least one circumferential groove (20) is arranged in the inside lying supporting surface between a peripheral row of openings (8) and a supplying opening (13, 14), which is aligned with at least one opening (22) of at least one venting channel (24) located in the control ring (2).

11. Actuating apparatus according to one of the preceding claims, **characterised in that** the rotating machine part (1) comprises at least two receiving conduits (17, 18) with check valves (19, 21) located at the entry side, wherein the check valve (10, 21) of each receiving conduit (17, 18) is compulsorily opened by a predetermined pressure in another receiving conduit (17, 18).

12. Actuating apparatus according to one of the preceding claims, **characterised in that** the machine part (1) is a front end chuck (1) and the mechanism is a pneumatically actuated device for an opening and closing, resp., of the chuck (1).

13. Method of actuating a mechanism which is located in a rotating machine part (1) and can be actuated by fluid pressure, wherein at least one flow of actuating fluid, between two fluid bearings which separate a non-rotating control part (2) from the machine part (1), crosses over from one part to the other, **characterised in that** the crossing over of the actuating fluid occurs between a number of openings (13, 14) of supplying conduits (11, 12) radially arranged at the control part and a row of openings (15, 16) of receiving channels (17, 18) radially arranged at the machine part (1), which are arranged in such a manner that in any relative position of both parts (1, 2) at least one opening (13,14) of each supplying conduit is at least partly aligned with at least one opening (15, 16) of a dedicated receiving channel (17, 18).

14. Method according to claim 13, **characterised in that** the escaping of supporting fluid out of the bearings caused by the positive pressure in the fluid bearings is used to counteract a contamination from the outside of the bearings as well as of the actuating fluid.

15. Application of the method according to one of the claims 13 to 14 for the switching of a workpiece holder on a machine tool.

## Revendications

1. Dispositif de commande pour au moins un mécanisme disposé dans une partie de machine rotative (1) et actionnable par la pression d'un fluide, avec une bague de commande (2) non rotative logée sur la partie de machine (1) qui comporte au moins un conduit émetteur (11, 12) pour l'amenée de fluide de commande à au moins un conduit récepteur (17, 18) associé, conduisant au mécanisme, dans la partie de machine rotative (1), dans lequel au moins une surface d'appui extérieure de la bague de commande (2) est logée à l'aide d'un fluide porteur sur au moins une surface d'appui intérieure de la partie de machine (1) et le courant de fluide de commande passant entre le conduit émetteur (11, 12) et le conduit récepteur (17, 18) traverse un espace annulaire maintenu par le fluide porteur entre la partie de machine (1) et la bague de commande (2), **caractérisé en ce qu'**au moins un conduit émetteur (11, 12) comporte plusieurs ouvertures émettrices (13, 14) décalées les unes par rapport aux autres selon un angle déterminé autour de l'axe du palier à fluide.

2. Dispositif de commande selon la revendication 1, **caractérisé en ce que** la bague de commande (2) comporte au moins un conduit d'alimentation (6) pour l'amenée du fluide porteur au palier à fluide qui se termine par au moins deux rangées d'embouchures (8) disposées sur la périphérie de surface d'appui extérieure.

3. Dispositif de commande selon la revendication 2, **caractérisé en ce que** le conduit d'alimentation (6) se termine par au moins deux rangées périphériques d'embouchures (8, 9), les vecteurs de direction des embouchures (9) des deux rangées dans la direction axiale du palier à fluide comportant des composants différents.

4. Dispositif de commande selon la revendication 3, **caractérisé en ce que** le conduit d'alimentation (6) se termine par une paire de rangées avec des embouchures dirigées vers l'intérieur (9) et par une paire de rangées avec des embouchures (9) orientées dans des direction axialement opposées.

5. Dispositif de commande selon l'une quelconque des revendications précédentes, **caractérisé en ce que** la bague de commande (2) comporte plusieurs conduits émetteurs (11, 12) pour le fluide porteur, les ouvertures émettrices (13, 14) des différents conduits (11, 12) étant décalées les unes par rapport aux autres dans la direction axiale du palier à fluide.

6. Dispositif de commande selon l'une quelconque des revendications précédentes, **caractérisé en ce que** la bague de commande (2) comporte au moins deux conduits émetteurs (11, 12), dont le premier conduit émetteur (12) est muni de deux paires décalées de 180° d'ouvertures émettrices (14) décalées les unes par rapport aux autres dans la direction axiale du palier à fluide, alors que le second conduit émetteur (11) est muni d'ouvertures émettrices également décalées de 180° (13) qui sont placées dans la direction axiale du palier à fluide entre les ouvertures émettrices (14) décalées les unes par rapport aux autres du premier conduit émetteur (12) et qui sont décalées d'un angle déterminé par rapport à celles-ci.

7. Dispositif de commande selon l'une quelconque des revendications 2 à 6, **caractérisé en ce qu'**au moins un conduit émetteur (11, 12) se termine par des ouvertures émettrices (13, 14) qui sont placées dans la direction axiale du palier à fluide entre deux rangées d'embouchures (8) disposées sur la périphérie.

8. Dispositif de commande selon l'une quelconque des revendications précédentes, **caractérisé en ce que** la partie de machine rotative (1) comporte au moins un conduit récepteur (17, 18) pour transférer la pression du fluide de commande à un mécanisme à commander, le conduit récepteur (17, 18) comportant une rangée d'ouvertures réceptrices (15, 16) disposées sur la périphérie dont au moins une est alignée sur une ouverture émettrice (13, 14) d'un conduit émetteur (11, 12) associé, dans chaque position de la partie de machine rotative (1).

9. Dispositif de commande selon la revendication 8, **caractérisé en ce que** les ouvertures réceptrices (15, 16) d'un conduit récepteur (17, 18) sont disposées selon une équipartition circulaire et **en ce qu'**au moins une ouverture émettrice (13, 14) du conduit émetteur (11, 12) associé forme une fente allongée dont la longueur est au moins égale à la distance entre deux ouvertures réceptrices (15, 16) successives plus la dimension transversale la plus petite d'une ouverture réceptrice (15, 16).

10. Dispositif de commande selon l'une quelconque des revendications 7 à 9, **caractérisé en ce que**, vu dans la direction axiale du palier à fluide, au moins une rainure circulaire (20), qui est alignée sur au moins une embouchure (22) d'au moins un conduit de ventilation (24) placé dans la bague de commande (2), conduisant à l'extérieur, est ménagée dans la surface d'appui intérieure, entre une rangée d'embouchures (8) disposées sur la périphérie et une ouverture émettrice (13, 14).

11. Dispositif de commande selon l'une quelconque des revendications précédentes, **caractérisé en ce que** la partie de machine rotative (1) comporte au moins deux conduits récepteurs (17, 18) avec des soupapes anti-retour (19, 21) disposées du côté de l'entrée, la soupape anti-retour (19, 21) de chaque conduit récepteur (17, 18) étant ouverte de manière forcée par une pression déterminée dans un autre conduit récepteur (18, 17).

12. Dispositif de commande selon l'une quelconque des revendications précédentes, **caractérisé en ce que** la partie de machine (1) est un coussinet d'extrémité avant (1) et **en ce que** le mécanisme est un dispositif à commande pneumatique pour ouvrir ou fermer le coussinet (1).

13. Procédé pour la commande d'un mécanisme disposé dans une partie de machine rotative (1) et actionnable par la pression d'un fluide, dans lequel au moins un courant de fluide de commande entre deux paliers à fluide, qui séparent une partie de commande non rotative (2) de la partie de machine rotative (1), passe d'une pièce à l'autre, **caractérisé en ce que** le passage du fluide de commande se fait entre un certain nombre d'ouvertures (13, 14) de conduits émetteurs (11, 12) ménagées radialement dans la partie de commande et une rangée d'ouvertures (15, 16) de conduits récepteurs (17, 18) ménagées radialement dans la partie de machine (1), qui sont disposées de telle manière qu'à chaque position relative des deux parties (1, 2), au moins une ouverture (13, 14) de chaque conduit émetteur (11, 12) est alignée au moins partiellement sur au moins une ouverture (15, 16) d'un conduit récepteur (17, 18) correspondant.

14. Procédé selon la revendication 13, **caractérisé en ce que** l'écoulement du fluide porteur hors des paliers provoqué par la surpression dans les paliers à fluide est utilisé pour lutter contre un encrassement des paliers provenant de l'extérieur ainsi que du fluide de commande.

15. Utilisation du procédé selon l'une quelconque des revendications 13 à 14, pour le montage d'un dispositif de fixation de pièces sur une machine-outil.
